**Europäisches Patentamt**

**European Patent Office**

**Office européen des brevets**

(19)

(11) Veröffentlichungsnummer: **0 068 483**
**B1**

(12)

# EUROPÄISCHE PATENTSCHRIFT

(45) Veröffentlichungstag der Patentschrift:
**16.10.85**

(51) Int. Cl.⁴: **H 04 M 1/08**

(21) Anmeldenummer: **82105726.2**

(22) Anmeldetag: **28.06.82**

(54) **Elektromechanische Schalteinrichtung für Fernsprechgeräte.**

(30) Priorität: **30.06.81 DE 3125812**

(43) Veröffentlichungstag der Anmeldung:
**05.01.83 Patentblatt 83/1**

(45) Bekanntmachung des Hinweises auf die Patenterteilung:
**16.10.85 Patentblatt 85/42**

(84) Benannte Vertragsstaaten:
**AT BE NL**

(56) Entgegenhaltungen:
**FR - A - 2 022 158**
**GB - A - 181 539**
**GB - A - 945 169**

(73) Patentinhaber: **Siemens Aktiengesellschaft, Berlin und München Wittelsbacherplatz 2, D-8000 München 2 (DE)**

(72) Erfinder: **Schinke, Hans-Joachim, Ing.grad., Euckenstrasse 42, D-8000 München 70 (DE)**

**Beschreibung**

Die Erfindung betrifft eine elektromechanische Schalteinrichtung für Fernsprechgeräte, mit einem Basisteil aus Isolierstoff, in dem als Blattfedern gestaltete Kontaktfedern einander in ihrer Kontur überdeckend, in parallelen, beabstandeten Ebenen nebeneinander angeordnet sind, wobei die Kontaktfedern jeweils mit einem Ende im Basisteil festgespannt und mit dem anderen Ende mittels eines am Basisteil geradlinig bewegbar geführten Steuerschiebers senkrecht zu ihrer Orientierungsebene elastisch auslenkbar sind.

Derartige Schalteinrichtungen sind als – meist durch die Schwerkraft eines zum Betrieb aufhebbaren Handapparates – zwischen zwei Positionen verstellbare Gabelumschalter in Gebrauch. Der das Verstellen der Kontakte bewirkende Steuerschieber ist gewöhnlich rechtwinkelig zu den parallelen Flächenebenen der auslenkbaren Kontaktfedern, d.h. parallel zu ihrer Auslenkrichtung bewegbar geführt. Die Antriebsbewegung kann z.B. mittels des Handapparates über Schaltleisten, die das Fernsprechergehäuse bewegbar durchsetzen, auf eine am Basisteil der Schalteinrichtung schwenkbar gelagerte Betätigungswippe, und von dieser auf den Steuerschieber übertragen werden.

Der Steuerschieber gibt die Antriebsbewegung über an seiner ebenen Seitenfläche vorstehende Mitnehmernocken unmittelbar an die sich senkrecht gegen seine ebene Seitenfläche erstreckenden, den Nocken einzeln zugeordneten freien Enden der auslenkbaren Kontaktfedern weiter.

Es ist weiterhin bekannt, Gabelumschalter mit zusätzlichen Kontaktanordnungen für vielfältige Schaltaufgaben, z.B. in Geräten mit erhöhtem Bedienungskomfort zu kombinieren. Für das einwandfreie Zusammenspiel der Kontaktanordnungen in der Gesamt-Schaltung des Gerätes ist es dabei meist erforderlich, beim Verstellen der Schalterposition eine vorgegebene, zeitliche Betätigungsfolge der Kontakte aus funktionellen Gründen streng einzuhalten.

Ein vorbestimmter, zeitlicher Ablauf der Schaltfolge ist erreichbar durch entsprechende räumliche Anordnung der Arbeitswege der einzelnen Kontakte hintereinander, innerhalb der Länge des gesamten Arbeitshubes des Steuerschiebers.

Ist der Steuerschieber parallel zur Auslenkrichtung der Kontaktfedern bewegbar, so wird er eine Kontaktfeder, die gleich zu Beginn des Arbeitshubes in seinen Einflussbereich geraten und bis in ihre Arbeitsstellung ausgelenkt und dabei z.B. von ihrem Ausgangszustand «offener Kontakt» in den Zustand «geschlossener Kontakt» bewegt worden ist, trotzdem bis zum Ende des Arbeitshubes über ihrer Betätigungsstellung hinaus weiter bewegen. Der mit der Kontaktfeder zusammenwirkende Gegenkontakt darf in diesem Fall nicht starr, sondern muss ebenfalls auslenkbar angeordnet sein, denn mittelbar wird auch er durch die vom Steuerschieber angetriebene Kontaktfeder über seine Betätigungsstellung hinaus weiter bewegt, wobei die Betätigungsstellung der zusammenwirkenden Kontaktelemente selbstverständlich unverändert erhalten bleibt.

Erfolgt nun die Betätigung der weiteren Kontakte mehr oder weniger in räumlicher Staffelung nach dem ersten Kontakt, während des Arbeitshubes des Steuerschiebers, so müssen in entsprechender Staffelung nacheinander immer mehr bereits betätigte Kontaktpaare elastisch über ihre Betätigungsstellung hinaus weiterbewegt werden, wobei in der Endstellung das erstbetätigte Kontaktpaar schliesslich am weitesten über seine eigentliche Betätigungsstellung hinaus, das zweite Kontaktpaar etwas weniger weit darüberhinaus, und so fort, ausgelenkt ist. Das hat zur Folge, dass die von der Schwerkraft des aufgelegten Handapparates zu überwindende Betätigungskraft während des Betätigungshubes entsprechend der gestaffelten Auslenkung der Kontaktelemente stufenweise ansteigt, und zwar wesentlich über die für die Funktion tatsächlich erforderliche Kraft hinaus. Bei den Schalteinrichtungen der eingangs beschriebenen Art, mit unterschiedlich grossem, variablem Kontaktaufbau ergibt sich daraus ein die Schaltsicherheit von Fall zu Fall unterschiedlich beeinflussender Störfaktor.

Es sind auch Gabelumschalter bekannt, bei denen die Kontaktfedern auslenkende Steuerelemente in rechtwinklig zur Auslenkrichtung der Kontaktfedern orientierten Ebenen rotierbar sind. Die Steuerelemente sind dabei an in Antriebsrichtung verlaufenden Seitenflächen jeweils mit einer mit dem freien Ende einer benachbarten Kontaktfeder zusammenwirkenden Steuerkurve versehen.

Durch entsprechende Dimensionierung einer derartigen Steuerkurve an der die Kontaktfeder z.B. mit einer nockenartigen Kröpfung mit Vorspannung anliegt, ist unabhängig von einem beliebigen Überhub der Antriebsbewegung des Steuerelementes ein eindeutig definierter Hub der auf die betreffende Kontaktfeder ausgeübten Auslenkbewegung erzielbar.

Auf diesem Prinzip beruht z.B. die Funktion und der Aufbau eines Gabelumschalters, wie er beschrieben ist in der Druckschrift FR-A 2 022 158. Die Steuerelemente sind bei diesem Gabelumschalter gebildet von senkrecht aus der gekrümmten Mantelfläche eines in Form eines Zylinderausschnittes gestalteten, rotierbaren Antriebskörpers hervortretenden Ansätze, die zwischen die freien Enden der kammartig angeordneten Kontaktfedern eingreifen und bei Rotation des Antriebskörpers jeweils eine zugeordnete Kontaktfeder auslenken.

Folgekontakte sind dabei durch entsprechenden räumlichen Versatz bestimmter Ansätze auf dem Antriebskörper und galvanische Verbindung der betreffenden Schaltkontakte herstellbar. Der als Zylinderausschnitt gestaltete, rotierbare Antriebskörper erstreckt sich bei diesem Gabelumschalter über die ganze Länge der kammartigen Kontaktanordnung und benötigt sehr viel Platz.

Der Erfindung liegt die Aufgabe zugrunde, eine Schalteinrichtung der genannten Art, bei der eine über die reine Betätigungsbewegung der jeweils zusammenwirkenden Kontaktfederpaare hinausgehende elastische Auslenkung trotz gestaffelter Betätigungsfolge einzelner Schaltkontakte vermieden ist, im Hinblick auf die Raumausnutzung zu verbessern.

Unter «reiner» Betätigungsbewegung der zusammenwirkenden Kontaktfedern sei hier der Arbeitshub der auslenkbaren Kontaktfeder von einer geschlossenen Kontaktstellung mit einem eine ausreichende Kontaktkraft sicherstellenden Überhub bis in eine für die elektrische Funktionssicherheit ausreichend weit geöffnete Stellung verstanden.

Diese Aufgabe ist nach der Erfindung dadurch gelöst, dass die Führungsbahn des Steuerschiebers am Basisteil parallel zur Längsrichtung der Kontaktfedern orientiert, der Steuerschieber mit starren, im wesentlichen parallelen Sprossen versehen ist, die parallel zu den Kontaktfedern von deren auslenkbaren Enden aus zwischen diese eingreifen, und dass die Steuersprossen an ihren den auslenkbaren Kontaktfedern zugewandten Seitenflächen mit jeweils einer aus der Ebene der betreffenden Seitenfläche vortretenden, geneigten Auflauffläche sowie einer sich daran anschliessenden, in gleichmässigem Abstand über der Ausgangsebene verlaufenden Auslenkfläche ausgestattet sind, die sich über einen Bruchteil der Länge der Sprosse erstrecken, dass die auslenkbaren Kontaktfedern jeweils in der Nähe ihres freien Endes mit einer senkrecht gegen die Auslenkfläche der benachbarten Schiebersprosse vortretenden Antriebsnocke versehen sind, eine in Richtung der Antriebsnocke orientierte, elastische Vorspannung aufweisen und dass neben den freien Enden der auslenkbaren Kontaktfedern, jeweils von der Seite der Auslenkfläche der benachbarten Schiebersprosse, ein Gegenkontakt mit parallelverlaufender, starrer Kontaktfläche zugeordnet und auf dem Basisteil festgelegt ist.

Auf diese Weise können auf dem Basisteil, eine Anzahl unabhängiger Einzelkontakte, jeweils aus einer auslenkbaren Kontaktfeder und einem zugeordneten, starren Gegenkontakt gebildet sein. Die elastische Vorspannung der Kontaktfedern kann in jedem Kontaktpaar eine ausreichende Kraft für den galvanischen Kontakt an der starren Gegenlage erzeugen. In die gleiche Richtung, wie die elastische Vorspannung der Kontaktfedern, kann sich auch jeweils die aus der Federebene hervortretende Betätigungsnocke erstrecken.

Parallel neben jeder auslenkbaren Kontaktfeder kann ferner, ihr zugewandt, jeweils auf der Seite, nach der sich die Betätigungsnocke erstreckt, nach der weiterhin die elastische Vorspannung gerichtet ist und auf der ihr die starre, als Gegenlage vorgesehene Kontaktfläche zugeordnet ist, eine Seitenfläche einer Sprosse des Steuerschiebers verlaufen. Diese im wesentlichen ebene Seitenfläche kann im Bereich der senkrecht gegen sie vorspringenden Nocke der Kontaktfeder mit einer ihrerseits gegen die Nocke vortretenden, keilartig geneigten Auflauffläche versehen sein, die in eine parallel über der Seitenfläche verlaufende Auslenkfläche übergeht. Bei der parallel zur Kontaktfederlänge orientierten Antriebsbewegung des Steuerschiebers kann die keilartige Auflauffläche der betreffenden Sprosse, jeweils über die anliegende Nocke gegen die elastische Vorspannung das Auslenken der Kontaktfeder bewirken. Eine weitere Antriebsbewegung des Steuerschiebers hat keine zusätzliche Auslenkung der Kontaktfeder mehr zur Folge. Die Nocke der betreffenden Feder gleitet vielmehr unter geringer Reibung auf der parallel über die Seitenfläche der Sprosse hervorgehobenen Auslenkfläche, und wird von dieser unverändert in ihrem ausgelenkten Zustand gehalten.

Der mittels Auflauf- und Auslenkfläche der Schiebersprosse über die Antriebsnocke herstellbare, ausgelenkte Zustand einer Kontaktfeder kann nun jeweils einer ausreichend geöffneten Kontaktstellung zwischen Kontaktfeder und Gegenlage entsprechen. Mit ausreichender Kraft geschlossen ist dagegen ein Kontakt, wenn die Antriebsspitze der Nocke von der betreffenden Auslenk- und Auflauffläche des Steuerschiebers freigegeben ist und berührungslos über der zurückgesetzten Ausgangsebene der Seitenfläche der Schiebersprosse steht. In diesem Fall kann sich die elastische Vorspannung der Feder zur Gänze in Kontaktkraft umsetzen.

Über diese beiden Endlagen hinaus braucht keine der auslenkbaren Kontaktfedern, auch wenn die Schaltfolge gestaffelt sein soll, betätigt zu werden, da die Auslenkung nicht vom Weg des Steuerschiebers sondern von dem Niveauunterschied zwischen der Auslenkfläche und der Ausgangsebene der Seitenfläche der jeweiligen Schiebersprosse bestimmt ist.

Die Staffelung der Betätigungsfolge der einzelnen Kontakte dagegen kann bei einer so aufgebauten Schalteinrichtung ohne Justierung durch einen von vornherein festgelegten masslichen Versatz der Auflauf- und Auslenkflächen an den einzelnen Schiebersprossen, in ihrer Lage zur Bewegungsrichtung des Steuerschiebers, bewirkt werden.

Die Sprossen des Steuerschiebers können den auslenkbaren Kontaktfedern so zugeordnet sein, dass jeweils eine Sprosse auf eine Kontaktfeder wirkt. Sie können genausogut aber auch mit ihren beiden einander abgewandten Seitenflächen jeweils auf benachbarte, in einander entgegengesetzter Richtung auslenkbare Kontaktfedern einwirken und dazu beidseitig mit Auflauf- und Auslenkflächen versehen sein.

Der Steuerschieber kann mit seinen Sprossen in ihren nicht mit Auflauf- und Auslenkflächen ausgestatteten Bereichen in Schlitzen des Basisteils der Schalteinrichtung geradlinig bewegbar geführt sein. Desgleichen können am Basisteil Aufnahmeschlitze und Orientierungselemente –für das lagerichtige Festspannen der auslenkbaren Kontaktfedern, sowie für das Festlegen der Gegenkontakte vorgesehen sein.

Nach einer Weiterbildung der Erfindung kann die der Auslenk- bzw. der Auflauffläche an der Seitenwand der jeweils benachbarten Sprosse des Steuerschiebers zugekehrte Antriebsnocke der auslenkbaren Kontaktfeder vorteilhaft als V-förmige, senkrecht zur Federebene und rechtwinkelig zur Federlänge orientierte Kröpfung gestaltet sein. Die Spitze der Nocke kann funktionsgerecht mit einem deutlichen Biegeradius versehen sein, wodurch ein stossarmes Gleiten der Nocke auch im Übergangsbereich zwischen ebener Seitenwand der Sprosse sowie Auflauf- und Auslenkfläche möglich ist. Selbstverständlich kann jede Nocke an Stelle einer Kröpfung auch durch einen in einem Durchbruch der Kontaktfeder verankerten Zapfen aus Isolierstoff verkörpert sein.

Nach einer anderen Weiterbildung der Erfindung können die im wesentlichen parallelen Sprossen des Steuerschiebers in ihren beiden Endbereichen jeweils mittels eines rechtwinkelig zur Sprossenlänge orientierten, holmartigen Steges verbunden sein. Ein so gestalteter Steuerschieber stellt ein kompaktes, formstabiles Bauteil dar, das auf einfache Weise als einstückiges Kunststoff-Formteil herstellbar ist.

Sprossen und Holme des Steuerschiebers können dabei ein jeweils im wesentlichen rechteckiges Querschnittsprofil aufweisen. Ein erster der Holme kann sich an einem Ende der Sprossen an deren Stirnkante erstrecken und auf der Seite der auslenkbaren Enden der Kontaktfeder ausserhalb des Basisteils je nach Betätigungsstellung des Steuerschiebers in mehr oder weniger grossen Abstand parallel zur betreffenden Seitenfläche des Basisteils verlaufen. Ein zweiter Holm kann als an den Seitenkanten im anderen Endbereich der Sprossen flach aufgesetzter Steg ausgebildet sein und sich bei der Arbeitsbewegung des Schiebers parallel zur Bodenfläche des Basisteils über den Seitenkanten der Kontaktfedern bewegen.

Einer der Holme des Steuerschiebers kann wenigstens eine rechtwinkelig zur Länge der Sprossen und Holme orientierte Öffnung für den Eingriff eines Antriebszapfens eines am Basisteil schwenkbar gelagerten Betätigungselements aufweisen. Das schwenkbare Betätigungselement kann als Schaltwippe ausgebildet sein, mit der die z.B. durch Aufheben und Niederlegen eines Handapparates induzierbare Antriebsbewegung über die Gehäusewand des Fernsprechers durchsetzende, bewegliche Schaltleisten auf dem Steuerschieber der Schalteinrichtung übertragbar ist. Eine derartige Schaltwippe ist gewöhnlich mittels eines Energiespeichers auf eine ihrer Anschlagstellungen vorgespannt und durch die Schwerkraft des auflegbaren Handapparates gegen diese Vorspannung in die andere Anschlagstellung bewegbar. Mit einem entsprechend gestalteten, starr an der Schaltwippe vorgesehenen Antriebszapfen ist ein nahezu spielfreier Eingriff in die Öffnung im seitlichen Holm des Steuerschiebers für die Bewegungsübertragung erzielbar.

Die als Gegenkontakte für die auslenkbaren Kontaktfedern vorgesehenen, starren Kontaktflächen können in ihrem Längenmass auf die Länge des freien Endbereichs der Kontaktfedern hinter deren Antriebsnocke beschränkt sein. Eine der seitlichen Kanten der Kontaktflächen kann jeweils in einem am Basisteil vorgesehenen Führungsschlitz lagefest eingeschoben sein. Auf diese Weise ist eine funktionsgerechte Positionierung der starren Kontaktflächen gegenüber den auslenkbaren Kontaktfedern auf dem Basisteil erzielbar.

An den als Gegenkontakte vorgesehenen Kontaktflächen kann – jeweils rechtwinkelig abgekantet – ein ebener Leiterstreifen angesetzt sein, der in auf der Grundebene des Basisteils aufgelegtem Zustand mittels aus der ebenen Auflagefläche der Grundebene hervortretender Formelemente funktionsgerecht z.B. parallel zu den die auslenkbaren Kontaktfedern darstellenden Blattfedern positioniert sein und an seinem der Kontaktfläche abgewandten Ende in eine Anschlussfahne übergehen, mit der er aus einer der äusseren Begrenzungsflächen des Basisteils senkrecht hervortritt. Diese, sowie an den festgespannten Enden der auslenkbaren Kontaktfedern vorgesehenen Anschlussfahnen ermöglichen den direkten Eingriff der Schalteinrichtung in eine Leiterplatte.

Jeweils zwei als Gengenkontakte dienende Kontaktflächen können als parallele Lappen eines U-Profils ausgebildet sein und mit der rechtwinkelig zu den Lappen verlaufenden Basis des U-Profils die Ausgangsebene für einen gemeinsamen, in die Anschlussfahne übergehenden Leiterstreifen darstellen.

Ein derartiges, symmetrisches Doppel-Gegenkontakt-Bauteil kann als Grundausführung des Stanzbiegeteils für die Gegenlage betrachtet werden. Für unterschiedlichste Kontaktanordnungen können aus diesem Grund Bauteil durch spezielle Trennschnitte Einzel-Gegenkontakte unterschiedlicher Bauformen für verschiedenartige Anwendungsfälle in der vorliegenden Schalteinrichtung erstellt werden.

Im folgenden sei die Erfindung anhand von in den Figuren dargestellten Details von Ausführungsbeispielen näher erläutert.

Es zeigen:

Fig. 1 eine Schalteinrichtung in auf einer horizontalen Leiterplatte aufrechtstehender Anordnung, in vereinfachter Aufrissdarstellung bei vergrössertem Darstellungsmassstab,

Fig. 2 die Schalteinrichtung nach Fig. 1, in um 90° geklappter Seitenansicht,

Fig. 3 eine Schalteinrichtung in liegender Anordnung, in Prinzipdarstellung,

Fig. 4 eine Schalteinrichtung für Drucktastenbetätigung, in Prinzipdarstellung,

Fig. 5 Einzelteile einer Schalteinrichtung entsprechend Fig. 1 und 2, in perspektivischer Explosionsdarstellung.

Die in den Figuren dargestellten Schalteinrichtungen besitzen jeweils mehrere als Blattfedern gestaltete, in parallelen Ebenen mit Abstand deckungsgleich nebeneinander in einem Basisteil 1 aus Isolierstoff angeordnete, im wesentlichen geradlinig-langgestreckte Kontaktfedern 2. Diese sind jeweils mit einem ihrer Enden 3 in rechtwinkelig zur Grundebene 5 des Basisteils verlaufenden Schlitzen aufgenommen sowie festgespannt, erstrecken sich dagegen mit dem anderen Ende 4, mit Abstand parallel, frei über der Grundebene und sind auf diese Weise senkrecht zu den Federebenen, d.h. parallel über der Grundebene des Basisteils elastisch auslenkbar.

Den auslenkbaren Enden 4 der Kontaktfedern sind starre Gegenlagen in Form von parallel orientierten Kontaktflächen 6 zugeordnet. In den korrespondierenden Bereichen 4 der Kontaktfedern und 6 der Gegenlagen sind drahtförmige Kontaktelemente 31 mit minimalem Kontaktwiderstand auf die jeweils einander zugewandten Flächen der Federn aufgebracht. Die Kontaktfedern 2 sind im Bereich ihres freien Endes 4, zur Erzielung einer gestaffelt wirkenden Doppelkontaktfunktion jeweils durch einen parallel zur Federlänge gerichteten Schlitz 32 in zwei symmetrische Endstreifen unterteilt.

Zur Betätigung der Schalteinrichtung, die aus mehreren Einzelkontakten mit jeweils einer auslenkbaren Kontaktfeder 2 und einem starren Gegenkontakt 6 aufgebaut ist, dient ein Steuerschieber 7. Dieser ist in einer am Basisteil 1 ausgebildeten Führungsbahn, zwischen Anschlagstellungen parallel zur Längsrichtung der Kontaktfedern geradlinig bewegbar aufgenommen. Er besitzt parallel zwischen die Kontaktfedern eingereifende, starre Steuersprossen 8. Die Führungsbahn im Basisteil 1 ist durch Schlitze 9 und Führungswippen 10 dargesellt, zwischen denen die Sprossen 8 des Schiebers 7 mit minimalem Spiel axial bewegbar aufgenommen sind.

Die Steuersprossen 8 sind an zwei ihrer einander abgewandten, ebenen Seitenflächen 11, die jeweils parallel neben den auslenkbaren Enden 4 zweier benachbarter Kontaktfedern 2 verlaufen, mit aus der Ebene der Seitenfläche gegen die Kontaktfedern hervortretenden, parallelen Auslenkflächen 12 sowie mit geneigt zu deren Niveau ansteigenden Auflaufflächen 13 versehen.

Die auslenkbaren Kontaktfedern 2 sind jeweils in der Nähe ihres freien Endes 4 mit einer senkrecht gegen die Auslenkflächen 12 der benachbarten Steuersprosse 8 vortretenden Antriebsnocke 14 versehen. Die Nocke ist im Ausführungsbeispiel jeweils als V-förmige Kröpfung der Feder gestaltet.

Die auslenkbaren Kontaktfedern 2 sind in Richtung der Antriebsnocke 14 elastisch vorgespannt (Pfeil P1), wodurch sie in ihrer Ruhelage bestrebt sind, galvanischen Kontakt mit der jeweils benachbarten Gegenlage 6 mit ausreichender Kontaktkraft zu halten.

Die Kontaktflächen 6 der Gegenlage sind in ihrer Länge auf den Endbereich 4 der auslenkbaren Kontaktfedern 2, hinter deren Antriebsnocke 14 beschränkt und mit ihrer freien Vorderkante 15 jeweils in einen Halteschlitz 16 einer seitlichen Begrenzungswand des Basisteils 1 eingefügt. Rechtwinkelig an die Kontaktfläche 6 der starren Gegenlage ist jeweils ein parallel auf der Grundebene 5 des Basisteils 1 aufgelegter Leiterstreifen 18 angesetzt, der in seinem Endbereich in eine Anschlussfahne 17 übergeht. Mittels auf der Grundebene 5 vorgesehener Orientierungsknöpfe 19 ist der Leiterstreifen 18 in funktionsgerechter Lage fixierbar. Die Anschlussfahne 17 durchsetzt so wie die an den festgespannten Enden 3 der auslenkbaren Kontaktfedern vorgesehenen übrigen Anschlussfahnen die der Leiterplatte 28 zugewandte Seitenwand des Basisteils und ermöglicht den unmittelbaren, galvanischen Eingriff der Schalteinrichtung in die Leiterplatte.

Jeweils zwei als Gegenlagen dienende starre Kontaktflächen 6 können auch als parallele Lappen eines einstückig gestalteten U-Profils ausgebildet sein, wobei die Basis 19 des U-Profils die Ausgangsebene für den in diesem Fall beide Kontaktflächen gemeinsam versorgenden Leiterstreifen 18 ist, der wie üblich in eine Anschlussfahne 17 ausläuft.

Die parallelen Sprossen 8 des Steuerschiebers 7 sind in ihren beiden Endbereichen jeweils mittels eines rechtwinkelig dazu verlaufenden, holmartigen Steges 20, 21 starr verbunden. Die Holme 20, 21 und Sprossen 8 haben vorwiegend rechteckiges Querschnittsprofil. Einer der Holme 20 erstreckt sich rechtwinkelig an den Stirnflächen der Sprossen. Der zweite Holm 21 verläuft im anderen Endbereich der Sprossen als flach auf ihre Seitenkanten aufgesetzter Steg.

Dieser Seitensteg 21 des Steuerschiebers ist zu Antriebszwecken mit einer Öffnung 22 versehen. In diese kann ein Antriebszapfen 23 für die Übertragung der Betätigungsbewegung eingreifen. Der Antriebszapfen 23 ist Bestandteil einer auf Lagerzapfen 33 an der Aussenfläche des Basisteils zwischen Anschlagstellungen um einen Winkel α schwenkbar gelagerten Schaltwippe 24, die mittels eines Energiespeichers 25 auf eine ihrer Endlagen vorgespannt ist.

Das Verschwenken der Schaltwippe 24 bewirkt über die Kopplung mittels des Antriebszapfens 23 und der Öffnung 22 die Antriebsbewegung des Steuerschiebers. Die Arbeitsbewegung der Kontaktfedern 2 dagegen ist durch den Niveauunterschied zwischen der Ausgangsebene der Seitenfläche 11 der Steuersprossen und der daraus jeweils hervortretenden Auslenkfläche 12 bestimmt.

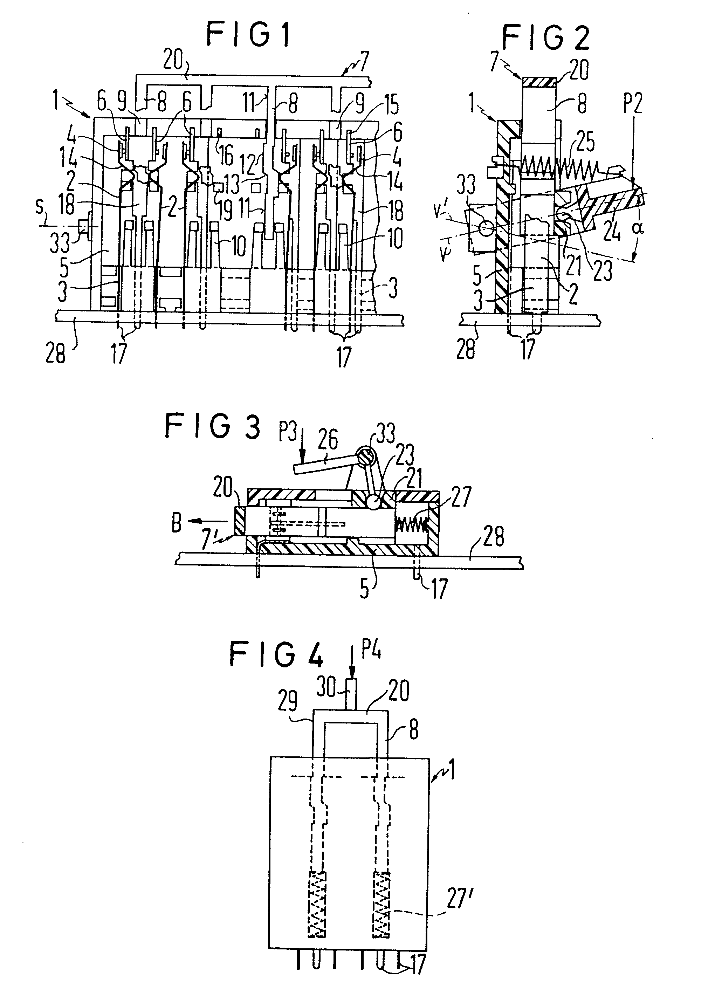

Bei der in Fig. 1 und 2 dargestellten Schalteinrichtung nach der Erfindung, mit senkrecht zur Leiterplatte 8 orientierter Grundebene 5 des Basisteils 1, aufrechtstehenden Kontaktfedern 2 und vertikal bewegbaren Steuerschieber 7 ist die an der Aussenfläche des Basisteils schwenkbar gelagerte Schaltwippe 24 in ihrer oberen Anschlagstellung gezeigt. In dieser Stellung ist sie durch die Kraft des als Zugfeder ausgebildeten, zwischen Basisteil und Schaltwippe ausgespannten Energiespeichers 25 gehalten.

Auch der Steuerschieber 7 befindet sich bei dieser Stellung der Wippe 24 aufgrund der formschlüssigen Antriebskoppelung mittels Zapfens und Durchbruch in seiner oberen Endlage, die der Betätigungsstellung «Handapparat abgenommen» entspricht. Der Pfeil P2 zeigt die Richtung, in der eine Kraft zum Auslenken der Schaltwippe angreifen muss, die auch den Steuerschieber in seine andere Endlage, entsprechend der Stellung «Handapparat aufgelegt», bringen kann.

Bei der in Fig. 3 dargestellten, zweiten Ausführung einer Schalteinrichtung nach der Erfindung sind die Führungsbahnen des Steuerschiebers 7 und die Kontaktfedern horizontal, parallel über der Leiterplatte 28, liegend orientiert. Die senkrecht zur Ebene der Leiterplatte, vertikal wirkende Betätigungskraft entsprechend dem Pfeil P3, die vorzugsweise als Schwerkraft vom Handapparat aufzubringen ist, wird in diesem Fall durch winkelförmige Ausbildung der Schaltwippe 26 in eine horizontal orientierte Bewegung umgelenkt und über die vorgenannten Koppelelemente «Zapfen 23 und Öffnung 22» auf den Steuerschieber 7' übertragen.

Die Schaltwippe ist in Fig. 3 in einer gegen die elastische Kraft eines Energiespeichers 27 (Druckfeder) belasteten Stellung gezeigt, die der Schaltstellung «Handapparat aufgelegt» entspricht. Bei Entlastung durch «Abheben des Handapparates» kann die zwischen Steuerschieber 7' und Basisteil 1' eingespannte Feder 27 den Steuerschieber 7' in Richtung des Pfeils B, und den freien Arm der Schaltwippe 26 entgegengesetzt zum Pfeil P3 bewegen.

Der Aufbau im Innenraum des Basisteils 1' kann im übrigen weitgehend der vertikalen Anordnung nach Fig. 1, 2 und 5 entsprechen und ist deshalb in der Darstellung nicht näher ausgeführt.

In Fig. 4 ist schliesslich eine Bauform einer Schalteinrichtung nach der Erfindung gezeigt, deren Antrieb mittels einer einen Steuerschieber – wie gehabt – gegen die Kraft eines Energiespeichers, unmittelbar beeinflussenden Drucktaste 30 bewirkt werden kann, wobei die dem Pfeil P4 entsprechende Antriebskraft manuell an der Drucktaste aufzubringen ist. Fig. 4 zeigt den Steuerschieber in entlasteter, oberer Endstellung, in der er durch die Kraft zweier ihn direkt beeinflussender Druckfedern 27', die den Energiespeicher bilden, gehalten ist.

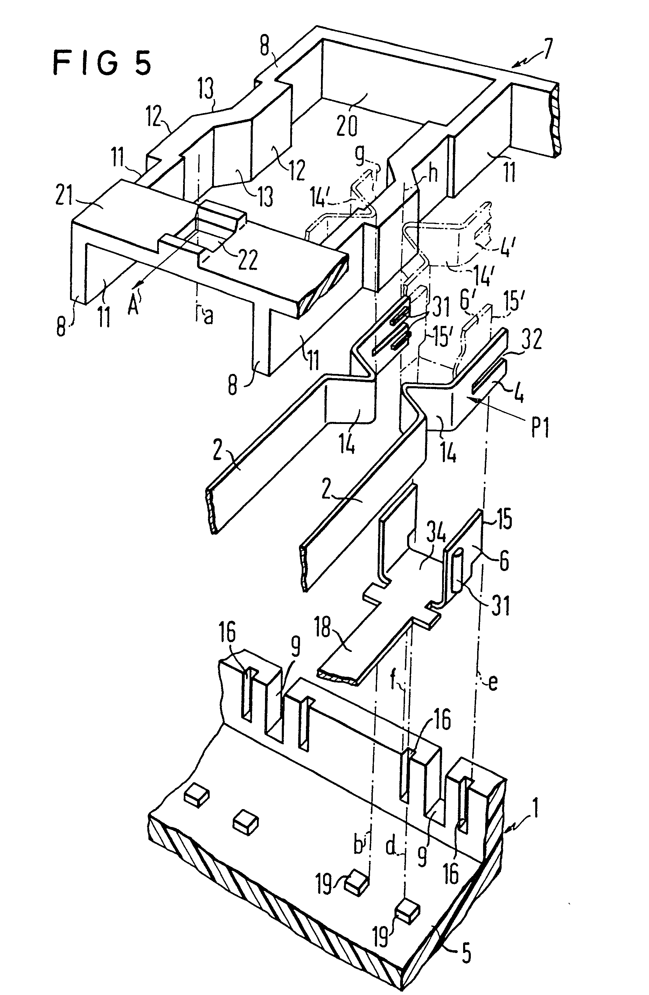

In Fig. 5 ist von oben nach unten zunächst ein Abschnitt eines Steuerschiebers 7 mit den jeweils abgebrochen dargestellten Holmen 20 und 21 zu sehen, wobei im Holm 21 eine Antriebsöffnung 22 mit in Bewegungsrichtung des Schiebers verstärkten Antriebswangen für den Angriff eines Antriebszapfens 23 vorgesehen ist. Der Antriebszapfen selbst ist hier nicht dargestellt sondern durch die Achse «a» des Zapfens und die rechtwinkelig dazu orientierte Antriebsrichtung entsprechend dem Pfeil A symbolisiert.

Rechtwinkelig zwischen den Holmen erstrekken sich zwei parallele Steuersprossen 8. Es ist leicht vorstellbar, dass beim Verlängern der beiden Holme über die dargestellten Bruchstellen hinaus auch noch Platz für weitere Sprossen bleibt, die zu dem kompletten Steuerschieber gehören.

Die als Ausgangsebene bezeichneten, einander parallel gegenüberliegenden, vertikalen Seitenflächen 11 der Sprossen 8, wie sie sich jeweils im Bereich der Holme 20, 21 erstrecken, können in Schlitzen 9 einer Seitenwand des weiter unten abschnittsweise dargestellten Basisteils 1 geradlinig bewegbar geführt sein.

Zwischen den zu Führungszwecken im Basisteil genutzten Abschnitten der Steuersprossen sind deren Seitenflächen, ausgehend von den als Führungsflächen 11 dienenden Ebenen, nach beiden Seiten jeweils gegen eine benachbarte Kontaktfeder 2 vortretend mit einer Auslenkfläche 12 und einer zwischen der Auslenkfläche 12 und der Ausgangsebene 11 vermittelnden, geneigten Auflauffläche 13 versehen. Darüberhinaus ist im Ausführungsbeispiel nach Fig. 5 jeweils ein Abschnitt der Seitenfläche der Sprossen, unmittelbar hinter der jeweils zur Ausgangsebene führenden, geneigten Auflauffläche 13 unter das Niveau der Ausgangsebene 11 abgesenkt, um in der entsprechenden Betätigungsstellung des Steuerschiebers eine Berührung zwischen der Antriebsnocke der betreffenden Kontaktfeder und dem entsprechenden Bereich der Steuersprosse mit Sicherheit zu vermeiden.

Unter einer der Sprossen 8 des Steuerschiebers 7 sind zwei den beiden Seitenflächen 11 der Sprosse zugeordnete, auslenkbare Kontaktfedern 2 dargestellt. Die im Basisteil fest zu spannenden Enden der Kontaktfedern sind nicht gezeigt. Zu sehen sind die V-förmig jeweils gegen die entsprechende Seitenfläche der Steuersprosse 8 gerichtete Nocke 14 und das auslenkbare Ende 4 der Kontaktfeder 2 mit im Kontaktbereich aufgebrachten, drahtförmigen Elementen 31 aus speziellem Kontaktwerkstoff, und mit einem symmetrischen Längsschlitz 32 zur Bildung von zwei, unabhängig voneinander verformbaren Kontaktenden. Die beiden Kontaktfedern sind jeweils in Richtung der Antriebsnocke, also einander entgegengesetzt vorgespannt zu denken (Pfeil P1).

Unter den auslenkbaren Kontaktfedern 2 sind zwei als Lappen eines U-Profils zusammengefasste, starre Kontaktflächen 6 gezeigt. Die Vorderkanten 15 der Kontaktflächen sind im an die Basis 34 des Profils angrenzenden Bereich ausgeklinkt. Sie treten dadurch dem Basisbereich gegenüber vor und ermöglichen das lagefeste Einschieben in Schlitze 16 in einer Seitenwand des Basisteils.

An die Basis des U-Profils schliesst sich ein ebener Leiterstreifen 18 mit winkelförmigen, seitlichen Vorsprüngen an, der zwischen Orientierungselementen 19 der ebenen Basisfläche funktionsgerecht fixierbar ist.

Die Achsen b, d, e, f und g, h sowie strichpunktiert eingezeichnete Details deuten an wie die Funktionsverbindung zwischen Steuerschieber 7, auslenkbaren Kontaktfedern 2, Gegenkontaktflächen 6 mit Leiterstreifen 18 und der Basis 1 vorzustellen ist.

**Patentansprüche**

1. Elektromechanische Schalteinrichtung für Fernsprechgeräte, mit einem Basisteil (1) aus Isolierstoff, in dem als Blattfedern gestaltete Kontaktfedern (2) einander in ihrer Kontur überdeckend, in parallelen, beabstandeten Ebenen nebeneinander angeordnet sind, wobei die Kontaktfedern jeweils mit einem Ende (3) im Basisteil (1) festgespannt und mit dem anderen Ende (4) mittels eines am Basisteil (1) geradlinig bewegbar geführten Steuerschiebers (7) senkrecht zu ihrer Orientierungsebene elastisch auslenkbar sind, dadurch gekennzeichnet, dass die Führungsbahn des Steuerschiebers (7) am Basisteil (1) parallel zur Längsrichtung der Kontaktfedern (2) orientiert und der Steuerschieber (7) mit starren, im wesentlichen parallelen Sprossen (8) versehen ist, die parallel zu den Kontaktfedern (2) von deren auslenkbaren Enden aus zwischen diese eingreifen, dass die Steuersprossen (8) an ihren den auslenkbaren Kontaktfedern (2) zugewandten Seitenflächen (11) mit jeweils einer aus der Ebene der betreffenden Seitenfläche vortretenden, geneigten Auflauffläche (13) sowie einer sich daran anschliessenden, in gleichmässigem Abstand über der seitlichen Ausgangsebene (11) verlaufenden Auslenkfläche (12) ausgestattet sind, dass die auslenkbaren Kontaktfedern (2) jeweils in der Nähe ihres freien Endes (4) mit einer senkrecht gegen die Auslenkfläche (12) der benachbarten Steuersprosse (8) vortretenden Antriebsnocke (14) versehen sind, eine in Richtung der Antriebsnocke orientierte elastische Vorspannung (P1) aufweisen und dass neben den freien Enden (4) der auslenkbaren Kontaktfedern (2), jeweils von der Seite der Auslenkfläche (12) der benachbarten Seitenfläche der Steuersprosse (8) ein Gegenkontakt (6) mit parallel verlaufender, starrer Kontaktfläche zugeordnet und auf dem Basisteil (1) festgelegt ist.

2. Elektromechanische Schalteinrichtung nach Anspruch 1, dadurch gekennzeichnet, dass die Antriebsnocken (14) der auslenkbaren Kontaktfedern (2) jeweils als V-förmige, senkrecht zur Federebene und rechtwinkelig zur Federlänge orientierte Kröpfung gestaltet sind.

3. Elektromechanische Schalteinrichtung nach Anspruch 1, dadurch gekennzeichnet, dass die parallelen Sprossen (8) des Steuerschiebers (7) in ihren beiden Endbereichen jeweils mittels eines rechtwinkelig zur Sprossenlänge orientierten, holmartigen Steges (20, 21) starr miteinander verbunden sind.

4. Elektromechanische Schalteinrichtung nach Anspruch 3, dadurch gekennzeichnet, dass Sprossen (8) und Holme (20, 21) des Steuerschiebers (7) ein im wesentlichen rechteckiges Profil aufweisen.

5. Elektromechanische Schalteinrichtung nach Anspruch 4, dadurch gekennzeichnet, dass einer der Holme (20, 21) des Steuerschiebers (21) wenigstens eine rechtwinkelig zur Länge der Sprossen und Holme orientierte Öffnung (22) für den Eingriff eines Antriebszapfens (23) eines am Basisteil schwenkbar gelagerten Betätigungselements (24) aufweist.

6. Elektromechanische Schalteinrichtung nach Anspruch 1, dadurch gekennzeichnet, dass die als Gegenkontakte vorgesehenen, starren Kontaktflächen (6) in ihrem Längenmass auf die Länge des freien Endbereichs (4) der auslenkbaren Kontaktfedern (2) hinter deren Antriebsnocke (14) beschränkt sind.

7. Elektromechanische Schalteinrichtung nach Anspruch 6, dadurch gekennzeichnet, dass an den als Gegenkontakte vorgesehenen Kontaktflächen (6), jeweils rechtwinkelig abgekantet, ein ebener Leiterstreifen (18) angesetzt ist, der in auf der Grundebene (5) des Basisteils (1) aufgelegtem Zustand mittels aus der ebenen Auflagefläche der Grundebene vortretender Formelemente (19) funktionsgerecht, parallel zu den die auslenkbaren Kontaktfedern darstellenden Blattfedern, positioniert ist und an seinem der Kontaktfläche (6) abgewandten Ende in eine Anschlussfahne (17) übergeht, mit der er aus einer der äusseren Begrenzungsflächen des Basisteils senkrecht hervortritt.

8. Elektromechanische Schalteinrichtung nach Anspruch 7, dadurch gekennzeichnet, dass jeweils zwei als Gegenkontakte dienende Kontaktflächen (6) als parallele Lappen eines U-Profils ausgebildet sind, und dass die rechtwinkelig dazu verlaufende Basis (34) des Profils Ausgangsebene für einen gemeinsamen, in die Anschlussfahne (17) übergehenden Leiterstreifens (18) ist.

**Claims**

1. An electro-mechanical switch for telephone apparatus, comprising a base part (1) made of insulating material and in which contact springs (2) in the form of leaf springs are arranged one beside another in parallel spaced planes so as to cover one another as regards their outline, the contact springs being in each case firmly clamped in the base part (1) at one end (3) and at the other end (4) can be elastically deflected at right angles to their plane of orientation by means of a control slide (7) which is guided so as to be linearly movable on the base part (1), characterised in that on the base part (1) the guide path of the control slide (7) is oriented parallel to the longitudinal direction of the contact springs (2) and the control slide (7) is provided with rigid, essentially parallel bars (8) which engage between the contact springs, parallel to the contact springs (2) from the deflectable ends thereof; that on their side surfaces (11) which face towards the deflectable contact springs (2), the control bars (8) are in each case provided with both a sloped contact surface (13), which protrudes from the plane of the respective lateral surface, and also with a deflecting surface (12) which adjoins the contact surface and extends at a constant distance from the lateral starting plane (11); that in the vicinity of their free ends (4), the deflectable contact springs (2) are in each case provided with a driving cam (14) which protrudes at right angles to the deflecting surface (12) of the adjacent control bar (8), and have an elastic prestress (P1) which is oriented in the direction of the driving cam; and that adjacent the free ends (4) of the deflectable contact springs (2), in each case from the side of the deflecting surface (12) of the adjacent side surface of the control bar (8), a counter-contact (6) is provided which has a parallel-extending, rigid contact surface and is fixed to the base part (1).

2. An electro-mechanical switch as claimed in Claim 1, characterised in that the driving cams (14) of the deflectable contact springs (2) are in each case formed as a V-shaped shoulder which is oriented at right angles to the plane of the spring and at right angles to the length of the spring.

3. An electro-mechanical switch as claimed in Claim 1, characterised in that at their two end zones, the parallel bars (8) of the control slide (7) are rigidly connected to one another by means of a beam-like cross-piece (20, 21) which is oriented at right angles to the length of the bars.

4. An electro-mechanical switch as claimed in Claim 3, characterised in that bars (8) and cross-beams (20, 21) of the control slide (7) have a profile which is essentially rectangular.

5. An electro-mechanical switch as claimed in Claim 4, characterised in that one of the cross-beams (20, 21) of the control slide (21) has at least one opening (22) which is oriented at right angles to the length of the bars and cross-beams and serves to engage a driving pin (23) of an actuating element (24) which is pivotable on the base part.

6. An electro-mechanical switch as claimed in Claim 1, characterised in that the rigid contact surfaces (6) which are provided as counter-contacts, are limited, as far as their length is concerned, to the length of the free end region (4) of the deflectable contact springs (2) behind the driving cam (14).

7. An electro-mechanical switch as claimed in Claim 6, characterised in that a flat conductor strip (18) which is bent at right angles is attached to the contact surfaces (6), which are provided as counter-contacts, said conductor strip in the situation when it is placed on the bottom plane (5) of the base part (1) is positioned parallel to the flat springs which constitute the deflectable contact springs, and so as to function properly by means of structural elements (19) which protrude from the flat contact surface of the bottom plane, said conductor strip at its end facing away from the contact surface (6) changing into a connecting tag (17), by means of which it protrudes vertically from one of the outer boundary surfaces of the base part.

8. An electro-mechanical switch as claimed in Claim 7, characterised in that two contact surfaces (6) which serve as counter-contacts, are in each case formed as parallel fins of a U-profile; and that the base (34) of the profile which extends at right angles thereto, represents the output plane of a common conductor strip (18) which changes into the connecting tag (17).

**Revendications**

1. Dispositif de commutation électromécanique pour appareils téléphoniques, comportant un élément de base (1) constitué en un matériau isolant et dans lequel des ressorts de contact (2) réalisés en forme de ressorts à lames sont disposés côte-à-côte dans des plans distants et parallèles de manière que leurs contours se recouvrent, les ressorts de contact pouvant être bloqués par serrage, par une de leurs extrémités (3), dans l'élément de base (1), tandis qu'ils peuvent être déviés élastiquement, par leur autre extrémité (4), perpendiculairement à leur plan d'orientation au moyen d'un poussoir de commande (7) guidé sur l'élément de base (1) de manière à pouvoir se déplacer suivant un mouvement rectiligne, caractérisé par le fait que la voie de guidage du poussoir de commande (7) sur l'élément de base (1) est orientée parallèlement à la direction longitudinale des ressorts de contact (2), que le poussoir de commande (7) est muni de barrettes (8) essentiellement parallèles, qui s'engagent, parallèlement aux ressorts de contact (2) et à partir des extrémités pouvant être déviées de ces derniers, entre ces extrémités, que les barrettes de commande (8) sont équipées, sur leurs surfaces latérales (11) qui sont tournées vers les ressorts de contact (2) pouvant être déviés, d'une surface montante inclinée (13), qui fait saillie à partir du plan de la surface latérale concernée, ainsi que d'une surface déviatrice (12) se raccordant à la surface montante et située à une distance uniforme par rapport au plan latéral de départ (11), que les ressorts de contact (2) pouvant être déviés sont équipés, à proximité de leur extrémité libre (4), d'une came d'entraînement (14) faisant saillie perpendiculairement par rapport à la surface médiatrice (12) de la barrette de commande voisine (12), et sont soumis à une précontrainte élastique (P1) orientée en direction de la came d'entraînement, et que près des extrémités libres (4) des ressorts de contact (2) pouvant être déviés se trouvent associés, respectivement du côté de la surface déviatrice (12) de la surface latérale voisine de la barrette de commande (8), un contact antagoniste (6) possédant une surface de contact rigide s'étendant parallèlement à ladite surface et que ce contact antagoniste est fixé sur l'élément de base (1).

2. Dispositif de commutation électromécanique suivant la revendication 1, caractérisé par le fait que les cames d'entraînement (14) des ressorts de contact (2) pouvant être déviés sont réalisées respectivement sous la forme d'un coude en V perpendiculaire au plan du ressort et orienté à 90° par rapport à l'étendue longitudinale du ressort.

3. Dispositif de commutation électromécanique suivant la revendication 1, caractérisé par le fait que les barrettes parallèles (8) du poussoir de commande (7) sont reliées rigidement entre elles, dans leurs deux zones d'extrémité, à l'aide de réglettes respectives (20, 21) en forme de traverses, orientées perpendiculairement à l'étendue longitudinale des barrettes.

4. Dispositif de commutation électromécanique suivant la revendication 3, caractérisé par le fait que les barrettes (8) et les traverses (20, 21) du poussoir de commande (16) possèdent un profil essentiellement rectangulaire.

5. Dispositif de commutation électromécanique suivant la revendication 4, caractérisé par le fait que l'une des traverses (20, 21) du poussoir de commande (16) comporte au moins une ouverture (22) orientée perpendiculairement à l'étendue longitudinale des barrettes et des traverses et servant à l'engrènement d'un téton d'entraînement (23) d'un organe d'actionnement (24) monté pivotant dans l'élément de base.

6. Dispositif de commutation électromécanique suivant la revendication 1, caractérisé par le fait que les surfaces de contact rigides (6) prévues en tant que contacts antagonistes, ont une longueur limitée à la longueur de la zone d'extrémité (4) des ressorts de contact (2) pouvant être déviés, en arrière de leur came d'entraînement (14).

7. Dispositif de commutation électromécanique suivant la revendication 6, caractérisé par le fait que sur les surfaces de contact (6) prévues en tant que contacts antagonistes, se trouve installée une bande conductrice plane (18) repliée à angle droit et qui, à l'état apposé sur le plan de base (5) de l'élément de base (1), est positionnée parallèlement aux ressorts à lames représentant les ressorts de contact pouvant être déviés, d'une manière correcte pour le fonctionnement à l'aide d'éléments de forme (19) faisant saillie à partir de la surface plane d'appui du plan de base, et se prolonge, sur son extrémité tournée à l'opposé de la surface de contact (6), par une languette de raccordement (17) par laquelle elle fait saillie perpendiculairement par rapport à la surface limite extérieure de l'élément de base.

8. Dispositif de commutation électromécanique suivant la revendication 7, caractérisé par le fait que respectivement deux surfaces de contact (6) servant de contacts antagonistes sont réalisées sous la forme d'ailes parallèles d'un profilé en U et que la base (34) du profilé, qui s'étend perpendiculairement à ces pattes, est un plan de départ pour une bande conductrice commune (18) se prolongeant par la languette de raccordement (17).

FIG 1

FIG 2

FIG 3

FIG 4

# F I G 5